# EUROPEAN PATENT APPLICATION

(11) **EP 4 769 941 A1**
(43) Date of publication of application: **01.07.2026**
(21) Application number: 24880123.5
(22) Date of filing: 16.10.2024
(51) Int. Cl.: H02S 50/10, G06T 7/00, G06N 3/08

(54) **DEEP LEARNING-BASED PHOTOVOLTAIC PANEL DEFECT DETECTION DEVICE, AND METHOD THEREFOR**

(30) Priority: 17.10.2023 KR 20230138824
(71) Applicant: Hanwha Solutions Corporation, Jung-gu Seoul 04541 (KR)
(72) Inventor: LEE, Hyu Sung, Seoul 04541 (KR)
(74) Representative: Mooser, Sebastian Thomas
(86) International application number: PCT/KR2024/015707
(87) International publication number: WO 2025/084786

(57) **Abstract**

The present disclosure relates to a method and device for detecting defects in a photovoltaic panel by using an image of the photovoltaic panel, and according to the method and device for detecting defects in a photovoltaic panel, it is possible to determine whether a photovoltaic panel is defective more quickly and accurately during a photovoltaic panel production process, by using a pre-trained artificial intelligence unit to detect defects, which are undetectable in an electroluminescence (EL) image, in an optical image of a photovoltaic panel rather than an **EL** image, and classify the detected defects by type, and measuring sizes of the defects to finally determine whether the photovoltaic panel is defective, thereby providing advantageous effects of shortening process time and reducing cost losses by improving a defect detection rate.

## Description

### Technical Field

The present invention relates to a technology for detecting defects in a photovoltaic panel, and more particularly, to a technology for detecting defects in a photovoltaic panel by using deep learning.

### Background Art

Although electricity is an indispensable element in daily life, power generation methods using fossil fuels and nuclear power have increasingly revealed various drawbacks, such as environmental pollution and climate change.

Accordingly, there is a growing interest in so-called renewable energy, such as tidal, wind, and solar power, as alternatives, and efforts have been made to replace power generation using fossil fuels or nuclear power.

Among these, solar power generation has attracted significant attention as a highly promising alternative energy source, and it employs a method of converting sunlight into electricity by using photovoltaic panels.

Because photovoltaic panels are means for directly converting sunlight into electricity, defects in the photovoltaic panels may lead to a reduction in power generation, and severe electrical defects may increase the risk of fire due to arcing or the like. Therefore, it is critical to detect defects during a manufacturing stage of photovoltaic panels.

Conventionally, the most widely used method for inspecting photovoltaic panels is an electroluminescence (EL) measurement method. A photovoltaic panel emits light in a specific wavelength range upon being supplied with electricity, and the EL measurement method detects defects by using an EL image captured of such light.

However, while EL image enables detection of various types of defects in photovoltaic panels, such as cracks, they are limited to detecting only those defect types distinguishable by light emitted upon supply of electricity, and there are problems with degraded detection performance, such as failure to detect fine cracks due to poor EL image quality or the occurrence of over-detection where a non-defective panel is incorrectly classified as defective.

### Disclosure of Invention

### Technical Problem

The present disclosure is to detect defect types that are undetectable in electroluminescence (EL) images, by using an optical image of a photovoltaic panel.

Furthermore, the present disclosure is to provide a device and method for detecting defects in a photovoltaic panel, which may shorten process time and lower the defect rate of final products by detecting defects in advance during a photovoltaic panel production process.

### Solution to Problem

A method of detecting defects in a photovoltaic panel, according to the present disclosure, includes: receiving an image of a photovoltaic panel; detecting defects by measuring dimensions of components in the image of the photovoltaic panel; classifying the image of the photovoltaic panel by defect type by using a pre-trained artificial intelligence unit; and finally determining whether the photovoltaic panel is defective by measuring sizes of the defects classified by type.

A device for detecting defects in a photovoltaic panel, according to another embodiment of the present disclosure, includes: an image input unit configured to receive an image of a photovoltaic panel; an artificial intelligence unit that is pre-trained to classify defects in the image of the photovoltaic panel; and a control unit including at least one processor and a memory, wherein the control unit is configured to detect defects by measuring dimensions of components in the image of the photovoltaic panel that is input through the image input unit, classify the defects in the image of the photovoltaic panel by type by using the artificial intelligence unit, and determine a defect type of the photovoltaic panel and a final defective status of the photovoltaic panel by measuring sizes of the defects classified by type.

### Advantageous Effects of Invention

According to an embodiment of the present disclosure, by classifying defect types in an optical image of a photovoltaic panel by using artificial intelligence and determining whether the photovoltaic panel is defective based on sizes of defects for the respective types, it is possible to detect defects that are undetectable in electroluminescence (EL) images, thereby providing advantages of lowering a defect rate of finally produced photovoltaic panels and reducing inspection time.

### Brief Description of Drawings

FIG. 1 is a schematic flowchart of a method of detecting defects in a photovoltaic panel, according to a preferred embodiment of the present disclosure.
FIG. 2 illustrates an example of an optical image of a photovoltaic panel.
FIG. 3 illustrates an example of a portion of an optical image of a photovoltaic panel to be used for dimension measurement.
FIG. 4 illustrates an example of a portion of an optical image of a photovoltaic panel to be used for dimension measurement.
FIG. 5 illustrates an example of a pre-processed optical image of a photovoltaic panel.
FIG. 6 illustrates examples of defect types detected in an optical image of a photovoltaic panel.
FIG. 7 illustrates examples of sizes of defect portions of a photovoltaic panel for respective defect types.
FIG. 8 illustrates an example of stored values of defect measurement results for a photovoltaic panel.
FIG. 9 is a schematic structural diagram of a device for detecting defects in a photovoltaic panel, according to another preferred embodiment of the present disclosure.

### Best Mode for Carrying out the Invention

A method of detecting defects in a photovoltaic panel, according to the present disclosure, includes: receiving an image of a photovoltaic panel; detecting defects by measuring dimensions of components in the image of the photovoltaic panel; classifying the image of the photovoltaic panel by defect type by using a pre-trained artificial intelligence unit; and finally determining whether the photovoltaic panel is defective by measuring sizes of the defects classified by type.

### Mode for the Invention

The above objectives and solutions of the present disclosure and the effects thereof will become clearer through the following detailed description with reference to the accompanying drawings, and accordingly, those of skill in the art to which the present disclosure pertains may easily implement the technical idea of the present disclosure. In addition, in describing the present disclosure, if it is determined that a detailed description of a known technique related to the present disclosure may unnecessarily obscure the gist of the present disclosure, the detailed description will be omitted.

In the present specification, terms such as "or" or "at least one" may indicate any one of the words listed together, or a combination of thereof. For example, "A or B" and "at least one of A and B" may include only one of A or B, and may also include both A and B.

In the present specification, terms such as 'first' or 'second' may be used to describe various elements, but the elements should not be limited by these terms. In addition, these terms should not be construed as limiting the order of components, and may be used for the purpose of distinguishing one component from another. For example, a 'first component' may be referred to as a 'second component', and similarly, a 'second component' may be referred to as a 'first component'.

Hereinafter, preferred embodiments according to the present disclosure will be described in detail with reference to the accompanying drawings.

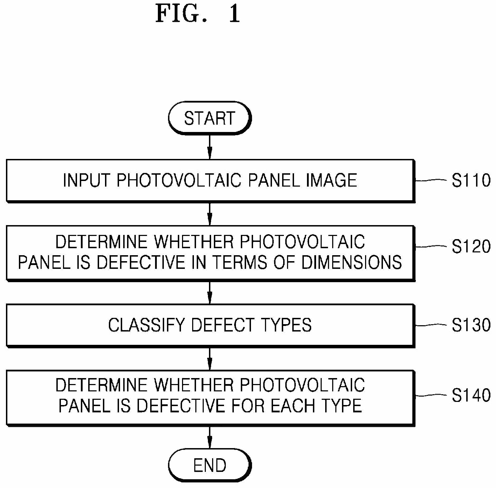

FIG. 1 is a schematic flowchart of a method of detecting defects in a photovoltaic panel, according to a preferred embodiment of the present disclosure.

The method of detecting defects in a photovoltaic panel according to the present disclosure may be performed by a control unit including one or more processors and a memory.

A photovoltaic panel refers to a flat plate-shaped device in which elements for converting light energy into electrical energy are integrated. A photovoltaic panel is generally manufactured in a modular form coupled with a frame and then installed to convert sunlight incident thereon into electrical energy. Such photovoltaic panels are manufactured by coupling one or more panel assemblies to each other, and the panel assembly is produced by electrically connecting a plurality of panels arranged in a predetermined manner, by using a plurality of wires.

To detect a defect in a photovoltaic panel, an image of the photovoltaic panel is input (S110).

Here, the present disclosure is characterized in that the image of the photovoltaic panel is an optical image, rather than an electroluminescence (EL) image.

An EL image is obtained by utilizing a phenomenon in which light of a specific wavelength is emitted when an electrical current is applied to a photovoltaic panel, and here, the wavelength is around 1 µm, and the EL image is obtained by using an EL camera capable of capturing this wavelength. Consequently, the EL image represents only the regions that emit light upon a current flow within the photovoltaic panel, and thus, it suffers from a drawback in that defects in non-emissive regions are undetectable. Furthermore, there is a further limitation that sharp images cannot be obtained due to a phenomenon similar to light blooming in the emissive regions.

Thus, the present disclosure is intended to solve the issues arising from the use of conventional EL images, by utilizing optical images of a photovoltaic panel.

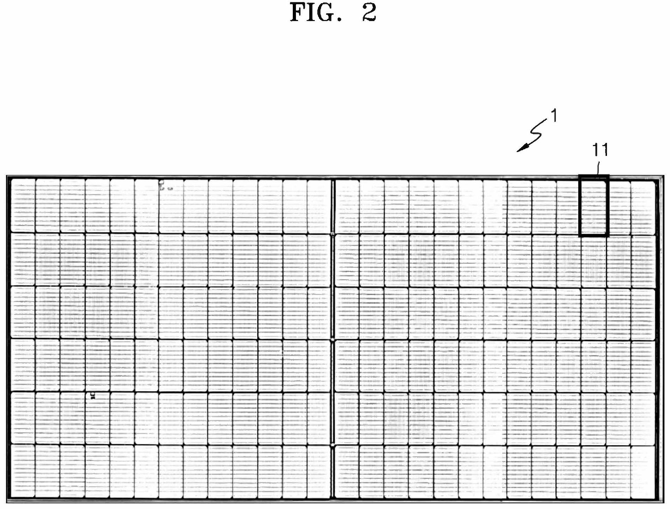

FIG. 2 illustrates an example of an input optical image of a photovoltaic panel.

A photovoltaic panel 1 includes a plurality of cells 11. According to the present disclosure, defects are detected by analyzing individual images of the cells 11, the spacing between the cells 11, or the like.

After the optical image of the photovoltaic panel 1 is received, dimensions are first measured to determine whether the photovoltaic panel 1 is defective (S120).

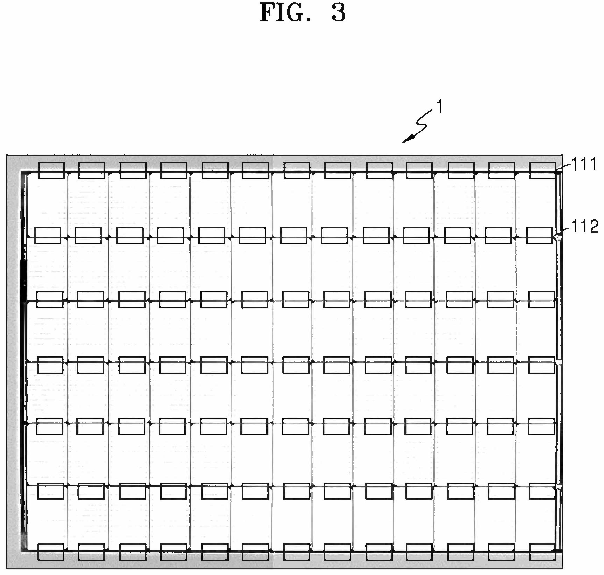

FIG. 3 illustrates an example of a portion of an optical image of a photovoltaic panel to be used for dimension measurement.

In the optical image of the photovoltaic panel 1 of FIG. 3, dimensions such as a spacing 111 between an outer edge of the photovoltaic panel 1 and the cell 11, and a spacing 112 between the cells 11 are measured and then compared with predetermined dimensions to determine whether the photovoltaic panel 1 is defective.

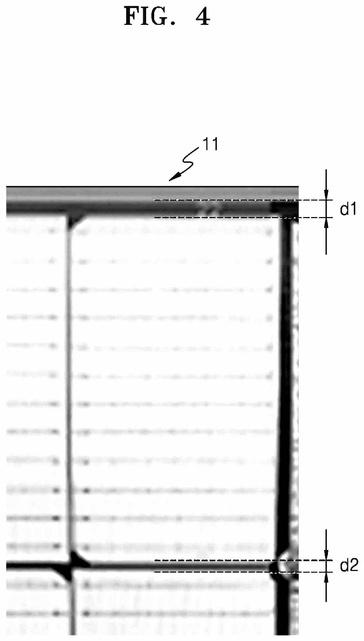

FIG. 4 illustrates an example showing in more detail a portion of an optical image of a photovoltaic panel to be used for dimension measurement.

In the cell 11 of the photovoltaic panel 1, when a distance d1 between each cell 11 and an outer boundary and a distance d2 between the cells 11 are greater or less than predetermined reference dimensions, or when the dimensions are not uniform, it may be determined that the photovoltaic panel 1 is defective in terms of dimensions.

For each cell 11 of the photovoltaic panel 1, measuring dimensions and determining whether the cell 11 is defective based on the measured dimensions may be performed and recorded.

Apart from the detection of dimension-related defects, defects categorized by type, other than simple dimensional defects, are detected (S130).

To classify and detect types of defects, an artificial intelligence unit may be used. The artificial intelligence unit is pre-trained to recognize defect types by using an artificial intelligence algorithm such as machine learning or deep learning.

Defect portions may be detected from an input image of a photovoltaic panel, and the types of the defects therein may be classified by the pre-trained artificial intelligence unit.

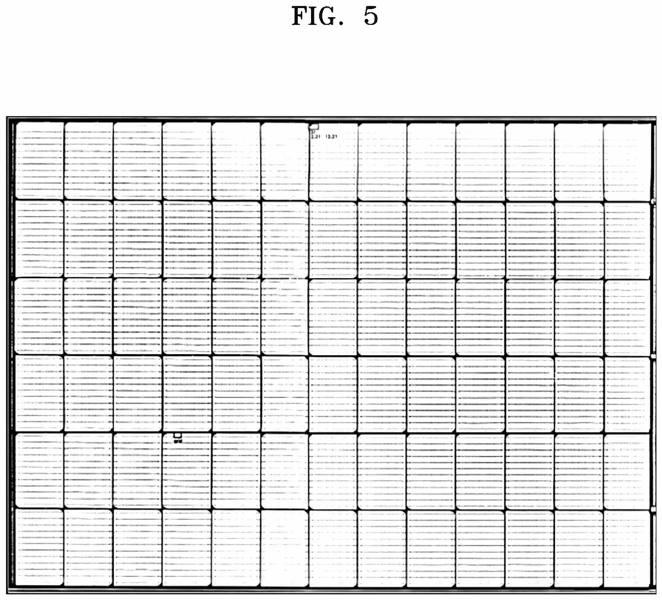

To this end, as illustrated in FIG. 5, pre-processing may be performed on the optical image of the photovoltaic panel, wherein the pre-processing includes resizing the image size, removing unnecessary portions such as a peripheral region of the image, and performing image normalization such that each cell 11 is clearly visible.

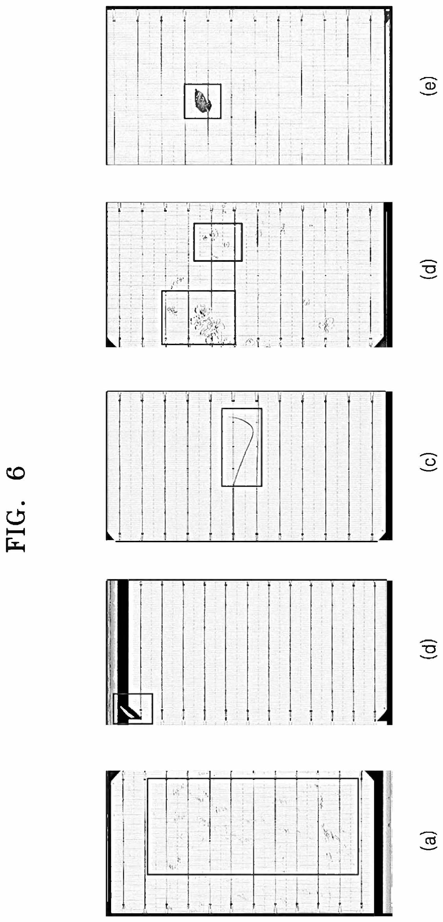

The pre-processed optical image of the photovoltaic panel may be classified into five types of defects as illustrated in FIG. 6. It should be understood that, while defects are classified into five types in the present embodiment, the artificial intelligence unit may further learn new types of defects and classify defects accordingly.

(a) of FIG. 65 illustrates a cluster defect.

This represents a defect in which surface scratches occur due to friction between photovoltaic panels or between a photovoltaic panel and equipment during, for example, transfer between processes.

(b) of FIG. 6 illustrates a crack defect.

A crack refers to breakage of the photovoltaic panel and may also be detected in an EL image, but due to the nature of EL images, there is a limitation in that only cracks of at least a certain size may be detected.

On the other hand, the present disclosure using an optical image is advantageous in that it may also detect cracks smaller than those detectable in EL images, i.e., cracks of a size undetectable in EL images.

(c) of FIG. 6 illustrates an inter-ribbon alignment defect.

This represents a defect in which the shape or alignment of wires included in cells of a photovoltaic panel is improper.

(d) of FIG. 6 illustrates a bubble defect.

This represents a case where a defect occurs because bubbles remain trapped rather than being discharged after a lamination process of a photovoltaic panel.

(e) of FIG. 6 illustrates a foreign material defect.

This represents a case where various foreign materials are introduced between manufacturing processes and remain entrapped within a photovoltaic panel without being removed.

As described above, the artificial intelligence unit learns and stores in advance various types of defects, and then classifies defects by type by analyzing input images of photovoltaic panels, thereby eliminating the need for manual inspection by an operator.

Finally, after such defects are classified by type, it is finally determined whether the photovoltaic panel 1 is defective for each type according to the sizes of the classified defects (S140).

The reason for this final measurement and determination is that, even when a defect, such as a scratch on the surface of the photovoltaic panel, is detected and classified by the artificial intelligence unit, it may be determined that the photovoltaic panel 1 is not defective when the performance thereof is not affected in view of the size of the defect.

In detail, it may be determined whether the photovoltaic panel 1 is defective by comparing a dimension of the defect with a predetermined threshold. The dimension of the defect may be a length or an area depending on the shape of the defect, and the threshold may be preset differently according to the shape of the defect.

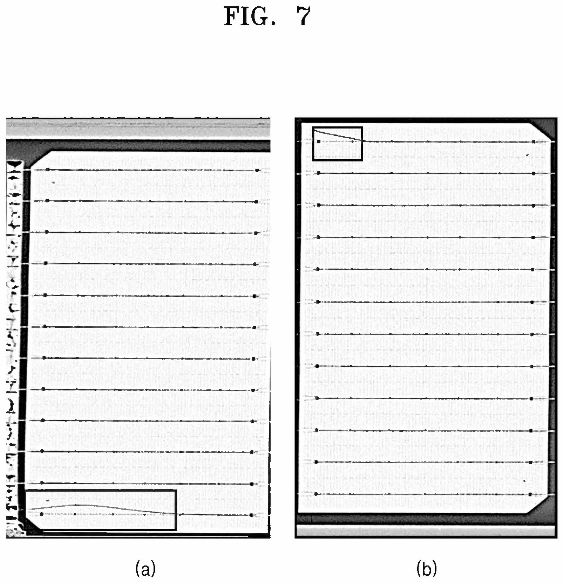

FIG. 7 illustrates examples of sizes of defect portions in a photovoltaic panel for each defect type described above.

Both (a) and (b) of FIG. 7 illustrate images classified as inter-ribbon alignment defects, i.e., wire shape defects.

In the case illustrated in (a) of FIG. 7, the size of a portion where a wire shape defect occurs, specifically, the length of the defect, is greater than a predetermined threshold, and thus, it is finally determined that the photovoltaic panel is defective, whereas in the case illustrated in (b) of FIG. 7, the size (length) of a portion where a wire shape defect occurs is less than the threshold, and thus, it is finally determined that the photovoltaic panel is not defective.

As described above, the threshold, which serves as a criterion for determining, based on the size of each defect, whether the photovoltaic panel is defective, may vary depending on the defect type. Furthermore, the threshold for the artificial intelligence unit to finally determine whether the photovoltaic panel is defective may be continuously learned, whereby the artificial intelligence unit is updated. Accordingly, the accuracy of defect determination may be continuously improved.

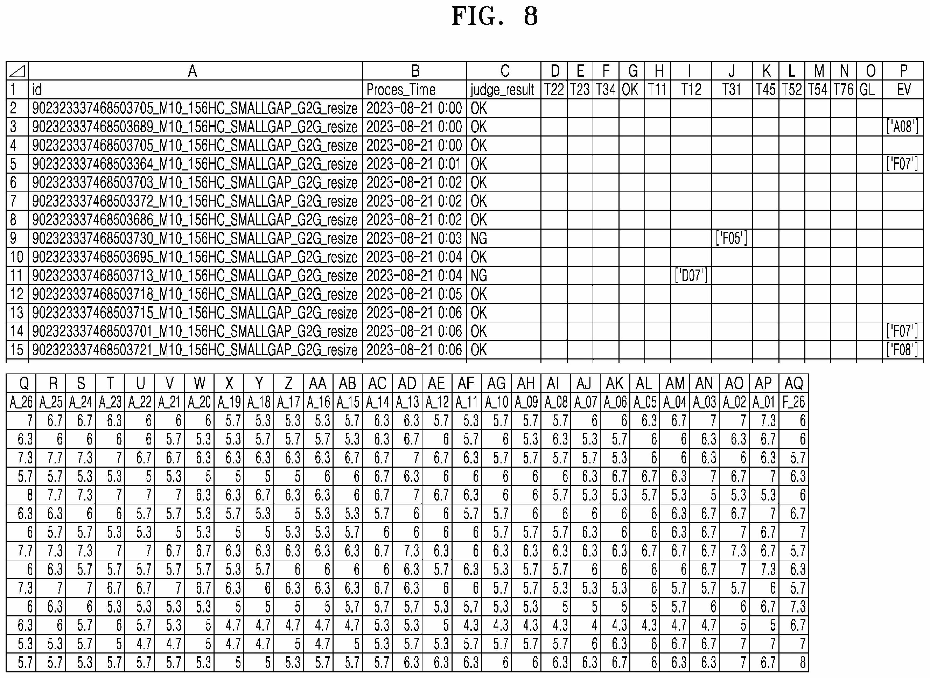

Dimension-related defects or shape-related defects determined by using the artificial intelligence unit may all be converted into numerical data and stored as illustrated in FIG. 8.

The artificial intelligence unit is further trained based on the numerical data related to the defects, and when a new type of defect is discovered, the artificial intelligence unit may be additionally trained to classify the new type of defect.

As such, according to the method of detecting defects in a photovoltaic panel of the present disclosure, by using artificial intelligence to detect defects of types or sizes that are undetectable in the prior art, it is possible to detect defects more accurately than when an operator manually inspects the photovoltaic panel during a manufacturing process, and reduce the inspection time.

Furthermore, because defective photovoltaic panels may be filtered out by detecting defects at the manufacturing stage, it is also advantageous in preventing a reduction in power generation efficiency due to electric leakage, or arcing or fire caused by a short circuit.

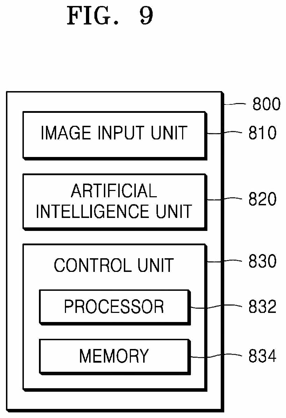

FIG. 9 is a schematic structural diagram of a device for detecting defects in a photovoltaic panel, according to another preferred embodiment of the present disclosure.

A device 800 for detecting defects in a photovoltaic panel, according to the present disclosure, may include an image input unit 810, an artificial intelligence unit 820, and a control unit 830.

The image input unit 810 is used to receive an optical image of a photovoltaic panel from an optical camera or the like.

The image input unit 810 may receive an optical image of a photovoltaic panel from a database or the like in which optical images of photovoltaic panels are stored, as well as from an optical camera.

The artificial intelligence unit 820 detects a defect portion from the image of the photovoltaic panel and classifies the defect portion by defect type.

To this end, the artificial intelligence unit 820 may be pre-trained for each defect type of photovoltaic panels, and may be continuously and further trained based on classification results for each defect type.

The control unit 830 may control the operation of the device 800 for detecting defects in a photovoltaic panel.

To this end, the control unit 830 may include at least one processor 832 and a memory 834.

The processor 832 may execute instructions or the like for controlling the device 800 for detecting defects in a photovoltaic panel.

Instructions or data for the operation of the processor 832 may be stored in the memory 834.

For example, the memory 834 may be flash memory, a hard disk drive (HDD), a solid-state drive (SSD), read-only memory (ROM), or the like, and the memory may include a buffer, random-access memory (RAM), or the like.

The control unit 830 determines whether the photovoltaic panel is defective by using the optical image of the photovoltaic panel that is input through the image input unit 810.

To this end, the control unit 830 first measures dimensions such as the size or spacing of cells of the photovoltaic panel and detects defects based on the dimensions. The detailed process thereof is as described above.

The control unit 830 classifies the defects by type by using the artificial intelligence unit 820 and finally determines whether the photovoltaic panel is defective, based on the sizes of the defects.

The artificial intelligence unit 820 may detect defects in an optical image of a photovoltaic panel according to a pre-trained algorithm, and classify the defects into five types including at least one of surface scratches, cracks, wire shapes, bubbles, and foreign materials, as in the example of FIG. 5, but the types of defects are not limited to these five types.

The control unit 830 finally determines whether the photovoltaic panel is defective, based on a size of a defect portion according to its defect type classified by the artificial intelligence unit 820. A size criterion for finally determining whether the photovoltaic panel is defective may vary depending on the defect type, and the criterion may also be learned and determined by the artificial intelligence unit 820.

As described above, according to the method and device for detecting defects in a photovoltaic panel of the present disclosure, various types of defects that are undetectable in EL images may be detected by using optical images of a photovoltaic panel, and the use of artificial intelligence provides an advantage of further increasing detection accuracy. Furthermore, the inspection time for determining whether the photovoltaic panel is defective may be shortened, and secondary accidents caused by defective panels, such as fires, may be prevented.

Although specific embodiments have been described in the detailed description of the present disclosure, modifications and changes may be made thereto without departing from the scope of the present disclosure. Therefore, the scope of the present disclosure should not be limited to the described embodiments, but should be determined by the appended claims and their equivalents.

## Claims

1. A method of detecting defects in a photovoltaic panel, the method being performed by a control unit comprising at least one processor and a memory, the method comprising:
receiving an image of a photovoltaic panel;
determining whether the photovoltaic panel is defective in terms of dimensions by measuring dimensions of components in the image of the photovoltaic panel;
detecting defects in the image of the photovoltaic panel and classifying the detected defects by type, by using a pre-trained artificial intelligence unit; and
determining, for each of defect types, whether the photovoltaic panel is defective by measuring sizes of the defects classified by type.

2. The method of claim 1, wherein the image of the photovoltaic panel is an optical image, rather than an electroluminescence (EL) image of the photovoltaic panel.

3. The method of claim 1, wherein the determining of whether the photovoltaic panel is defective in terms of dimensions comprises determining whether the photovoltaic panel is defective by measuring a dimension between a cell constituting the photovoltaic panel and an edge of the photovoltaic panel, or a dimension between cells.

4. The method of claim 1, wherein the defect types are defect types that are undetectable in an EL image of the photovoltaic panel.

5. The method of claim 4, wherein the defect types comprise at least one of a surface scratch, a crack, a wire shape, a bubble, and a foreign material.

6. The method of claim 1, wherein the determining, for each of defect types, of whether the photovoltaic panel is defective by measuring the sizes of the defects classified by type comprises, based on the size of the defect being greater than a predetermined threshold that is set for the type of the defect, determining that the photovoltaic panel is defective.

7. A device for detecting defects in a photovoltaic panel, the device comprising:
an image input unit configured to receive an image of a photovoltaic panel;
an artificial intelligence unit that is pre-trained to classify defects in the image of the photovoltaic panel; and
a control unit comprising at least one processor and a memory,
wherein the control unit is configured to determine whether the photovoltaic panel is defective in terms of dimensions by measuring dimensions of components in the image of the photovoltaic panel that is input through the image input unit, use the artificial intelligence unit to detect defects in the image of the photovoltaic panel and classify the detected defects by type, and determine, for each of defect types, whether the photovoltaic panel is defective by measuring sizes of the defects classified by type.

8. The device of claim 7, wherein the image of the photovoltaic panel is an optical image, rather than an electroluminescence (EL) image of the photovoltaic panel.

9. The device of claim 7, wherein the control unit is further configured to determine whether the photovoltaic panel is defective in terms of dimensions by measuring a dimension between a cell constituting the photovoltaic panel and an edge of the photovoltaic panel, or a dimension between cells.

10. The device of claim 7, wherein the defect types are defect types that are undetectable in an electroluminescence (EL) image of the photovoltaic panel.

11. The device of claim 10, wherein the defect types comprise at least one of a surface scratch, a crack, a wire shape, a bubble, and a foreign material.

12. The device of claim 7, wherein the determining, for each of defect types, of whether the photovoltaic panel is defective by measuring the sizes of the defects classified by type comprises, based on the size of the defect being greater than a predetermined threshold that is set for the type of the defect, determining that the photovoltaic panel is defective.
